# FASCICULE DE BREVET EUROPEEN

(11) **EP 2 608 512 B1**
(45) Date de publication et mention de la délivrance du brevet: **08.07.2015**
(21) Numéro de dépôt: 12198135.1
(22) Date de dépôt: 19.12.2012
(51) Int. Cl.: H04M 15/00, H04M 3/54

(54) **Procédé de communication dans un système de télécommunications**
Kommunikationsverfahren in einem Telekommunikationssystem
Communication method in a telecommunications system

(30) Priorité: 19.12.2011 FR 1161949
(43) Date de publication de la demande: 26.06.2013
(73) Titulaire: Orange, 75015 Paris (FR)
(72) Inventeur: Toutain, François, 22700 LOUANNEC (FR); Gustin, Emmanuel, 22700 SAINT QUAY PERROS (FR)
(74) Mandataire: Regimbeau

(56) Documents cités:
- WO-A1-02/21819
- US-A1- 2004 151 296

## Description

L'invention concerne le domaine des services de télécommunications et, plus particulièrement, des services d'appel. Elle vise un procédé de communication, un système de télécommunications, un terminal, un serveur et un programme d'ordinateur.

On sait que, dans un réseau de télécommunications, un premier terminal, dit appelant, peut initier une communication vocale vers ou à destination d'un second terminal, dit appelé, sur un lien de communication de données de type voix. Chaque terminal est associé à un abonnement lui autorisant ou non l'utilisation du réseau pendant une période donnée, par exemple, mensuelle. Un tel abonnement permet, selon son type, au terminal de communiquer vocalement pour une durée limitée ou illimitée, par exemple selon la destination d'appel. L'abonnement du terminal appelant est généralement utilisé lorsque celui-ci initie l'appel.

Cependant, il est fréquent, dans le cas d'un abonnement à durée limitée, que la durée d'appel ne soit pas consommée entièrement pendant la période donnée d'abonnement, la durée d'appel restante pouvant alors être perdue. Plus généralement, un utilisateur d'un terminal peut souhaiter céder une partie de la durée d'appel de son abonnement.

L'invention a pour but de créer un service, de surcroît simple et efficace, permettant à un utilisateur d'un réseau de télécommunications d'effectuer des appels en consommant l'abonnement d'un autre utilisateur du réseau de télécommunications.

A cet effet, selon l'invention, un procédé de communication pour l'appel, depuis un premier terminal, vers un second terminal, est innovant en ce qu'il comprend, pour un serveur, les étapes de :
- réception d'une requête d'appel vers le second terminal, envoyée par le premier terminal,
- sélection d'un numéro d'appel vers un troisième terminal,
- activation d'un renvoi d'appel du troisième terminal vers le second terminal, et,
- envoi, au premier terminal, du numéro d'appel sélectionné.

Le serveur envoie ainsi au premier terminal un numéro d'appel vers un troisième terminal de sorte à permettre au premier utilisateur d'établir une communication avec le troisième terminal. Lorsque le premier terminal établit la communication avec le troisième terminal, le renvoi d'appel du troisième terminal vers le second terminal, préalablement activé par le serveur, permet l'établissement d'une communication vocale entre le premier terminal et le second terminal. Dans le cas d'un renvoi d'appel, l'abonnement du terminal pour lequel le renvoi a été activé, ici le troisième terminal, est consommé. En d'autres termes, un tel renvoi consomme l'abonnement du troisième terminal pour le coût d'une communication entre le troisième terminal et le second terminal. Ainsi, l'abonnement du premier terminal est d'abord consommé pour la communication établie entre le premier terminal et le troisième terminal et l'abonnement du troisième terminal est ensuite consommé pour la communication, établie par renvoi d'appel du troisième terminal vers le second terminal, entre le premier terminal et le second terminal. Le premier terminal ne consomme ainsi son abonnement que pour la communication avec le troisième terminal tandis que le troisième terminal consomme son abonnement pour la communication entre le premier terminal et le second terminal. Ceci est avantageux notamment dans le cas où l'appel est réalisé à une heure ou vers un lieu non compris dans l'abonnement du premier terminal, mais compris dans celui du troisième terminal.

Avantageusement, le procédé selon l'invention comprend une étape préliminaire de réception du numéro d'appel d'un troisième terminal et, éventuellement, au moins une information parmi : le code de renvoi d'appel du troisième terminal, si celui-ci est nécessaire pour activer un renvoi d'appel, un identifiant d'un réseau de télécommunications ou d'un opérateur d'un réseau de télécommunications du troisième terminal, les caractéristiques d'un abonnement associé au troisième terminal, telles que, par exemple, les dates ou horaires auxquels l'abonnement peut être utilisé, une durée d'appel, une destination d'appel donnée (par exemple, vers un pays donné), le numéro d'appel et ces informations étant envoyés par le troisième terminal ou un second serveur.

Le serveur peut ainsi sélectionner le troisième terminal en fonction de son abonnement, c'est-à-dire, par exemple, lorsque l'instant de l'appel du premier terminal ou la destination d'appel correspondent à l'abonnement du troisième terminal.

Selon un aspect de l'invention, le procédé comprend en outre une étape de réception d'un message de désactivation de renvoi d'appel.

L'invention concerne aussi un procédé de communication pour l'appel, depuis un premier terminal, vers un second terminal, innovant en ce qu'il comprend, pour le premier terminal, les étapes de :
- envoi d'une requête d'appel vers le second terminal,
- réception d'un numéro d'appel vers un troisième terminal, et,
- initialisation d'un appel vers le troisième terminal à partir du numéro d'appel reçu.

La requête d'appel vers le second terminal est envoyée au serveur qui en retour renvoie au terminal un numéro d'appel vers un troisième terminal. La requête d'appel vers le second terminal comprend un numéro d'appel vers le second terminal et peut comprendre en outre au moins une autre information telle que, par exemple, la durée d'appel maximale de la communication entre le premier terminal et le second terminal.

Le numéro d'appel, vers le troisième terminal, reçu peut être mis ou non à la disposition de l'utilisateur du premier terminal. En d'autres termes, l'utilisateur du premier terminal peut ou non avoir accès au numéro d'appel vers le troisième terminal.

En outre, selon un aspect de l'invention, l'initialisation peut être réalisée automatiquement, c'est-à-dire sans l'intervention d'un utilisateur du premier terminal, sur réception du numéro d'appel vers le troisième terminal.

Suite à l'initialisation de l'appel vers le troisième terminal à partir du numéro d'appel reçu et si l'appel aboutit, c'est-à-dire que la communication entre le premier terminal et le second terminal est établie, le premier terminal et le second terminal peuvent communiquer, par exemple, pendant une durée prédéterminée qui peut correspondre à une durée d'appel configurée sur le premier terminal, qui met fin à la communication lorsque cette durée est écoulée, ou bien qui peut correspondre à la durée d'appel maximale envoyée au serveur, par le premier terminal, dans la requête d'appel vers le second terminal. Dans ce dernier cas, le serveur peut, par exemple, envoyer un message de signalisation dans le réseau de télécommunications pour mettre fin à la communication entre le premier terminal et le second terminal lorsque la durée d'appel maximale est écoulée.

Avantageusement, le premier terminal envoie un message d'établissement de communication au serveur suite à l'établissement de la communication entre le premier terminal et le second terminal de sorte que le serveur puisse désactiver le renvoi d'appel vers le troisième terminal.

Dans un mode de réalisation alternatif du procédé selon l'invention, le premier terminal envoie un message de fin de communication au serveur suite à la fin de la communication entre le premier terminal et le second terminal de sorte que le serveur puisse désactiver le renvoi d'appel vers le troisième terminal.

L'invention concerne aussi un procédé de communication pour l'appel, depuis un premier terminal, vers un second terminal, dans un système de télécommunications comprenant un serveur, le procédé étant innovant en ce qu'il comprend les étapes de :
- envoi, par le premier terminal, d'une requête d'appel vers le second terminal,
- réception, par le serveur, d'une requête d'appel vers le second terminal, envoyée par le premier terminal,
- sélection, par le serveur, d'un numéro d'appel vers un troisième terminal,
- activation, par le serveur, d'un renvoi d'appel du troisième terminal vers le second terminal,
- envoi, par le serveur, au premier terminal, du numéro d'appel sélectionné,
- réception, par le premier terminal, du numéro d'appel sélectionné, et,
- initialisation, par le premier terminal, d'un appel vers le troisième terminal à partir du numéro d'appel reçu.

Selon un aspect de l'invention, la requête d'appel vers le second terminal comprend le numéro d'appel vers le second terminal.

L'invention concerne aussi un serveur, innovant en ce qu'il comprend :
- un module de réception d'une requête d'appel vers un second terminal, envoyée par un premier terminal,
- un module de sélection d'un numéro d'appel vers un troisième terminal,
- un module d'activation d'un renvoi d'appel du troisième terminal vers le second terminal, et,
- un module d'envoi, au premier terminal, du numéro d'appel sélectionné.

L'invention concerne aussi un système de télécommunications pour l'appel, d'un premier terminal, vers un second terminal, innovant en ce qu'il comprend :
- un premier terminal, un second terminal et au moins un troisième terminal, le premier terminal comprenant :
- un module d'envoi d'une requête d'appel vers le second terminal,
- un module de réception d'un numéro d'appel vers un troisième terminal,
- un module d'initialisation d'un appel vers un troisième terminal à partir d'un numéro d'appel reçu,
- un serveur comprenant :
- un module de réception d'une requête d'appel vers le second terminal, envoyée par le premier terminal,
- un module de sélection d'un numéro d'appel vers un troisième terminal,
- un module d'activation d'un renvoi d'appel du troisième terminal vers le second terminal, et,
- un module d'envoi, au premier terminal, d'un numéro d'appel sélectionné, et,
- un réseau de télécommunications entre le premier terminal, le second terminal, le troisième terminal et le serveur.

Selon un aspect de l'invention, le système de télécommunications comprend en outre un second serveur comprenant un module de gestion de renvoi d'appel agencé pour gérer les renvois d'appel dans le réseau de télécommunications, le module d'activation du premier serveur étant alors agencé pour activer le renvoi au niveau du second serveur. Par « activer le renvoi au niveau du second serveur », on entend l'envoi, au second serveur, d'une commande permettant la gestion, par le second serveur, d'un renvoi d'appel du troisième terminal vers le second terminal.

L'invention concerne aussi un programme d'ordinateur comportant des instructions pour la mise en oeuvre, par un serveur, du procédé tel que défini ci-dessus lorsque ce programme est exécuté par un processeur.

L'invention concerne aussi un programme d'ordinateur comportant des instructions pour la mise en oeuvre, par un terminal, du procédé tel que défini ci-dessus lorsque ce programme est exécuté par un processeur. Un tel programme d'ordinateur peut être intégré, par exemple, à une application de type Softphone, une telle application étant configurée pour initier et recevoir des appels, par exemple, en utilisant un protocole du type VoIP.

L'invention concerne enfin un programme d'ordinateur comportant des instructions pour la mise en oeuvre, par un système, du procédé tel que défini ci-dessus lorsque ce programme est exécuté par un processeur.

D'autres caractéristiques et avantages de l'invention apparaîtront lors de la description qui suit faite en regard des figures annexées données à titre d'exemples non limitatifs et dans lesquelles des références identiques sont données à des objets semblables.
La figure 1 représente schématiquement le système de télécommunications selon l'invention.
La figure 2 représente schématiquement le premier terminal selon l'invention.
La figure 3 représente schématiquement le serveur selon l'invention.
La figure 4 illustre un procédé de communication selon une premier mode de réalisation.
La figure 5 illustre un procédé de communication selon une second mode de réalisation.

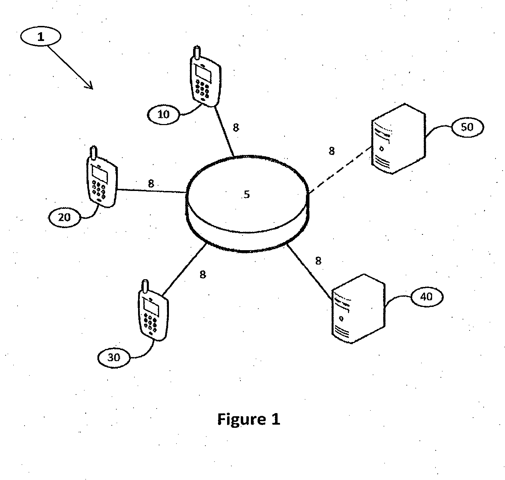

Dans la forme de réalisation du système de télécommunications selon l'invention illustré par la figure 1, le système 1 comprend un réseau 5 de télécommunications, un premier terminal 10, un second terminal 20, un troisième terminal 30, un premier serveur 40 et un second serveur 50.

Le réseau 5 de télécommunications comprend une pluralité de liens de communication 8 agencés pour permettre aux terminaux 10, 20, 30 et aux serveurs 40, 50 de communiquer entre eux. Les terminaux 10, 20, 30 sont agencés pour établir des communications et communiquer, entre eux et avec le serveur 40, dans le réseau 5, sur les liens de communication 8, de sorte à échanger des données telles que, par exemple, des messages, des requêtes ou bien de la voix. Des données de voix peuvent être échangées en utilisant, par exemple, un protocole de VoIP, ou tout autre protocole d'échange de données de voix, par exemple, défini dans des normes telles que Global System for Mobile communications (GSM), Universal Mobile Telecommunications System (UMTS), etc. Les terminaux 10, 20, 30 peuvent être de type téléphone fixe, téléphone mobile, par exemple, un smartphone, ou bien un ordinateur tel qu'un laptop ou un Personal Computer (PC).

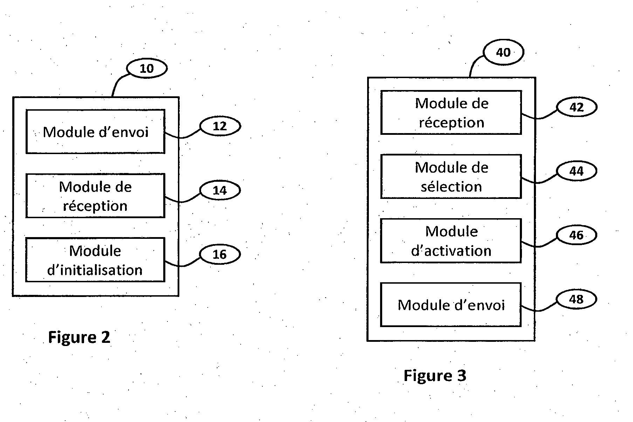

Le premier terminal 10 comprend, comme illustré par la figure 2, un module 12 d'envoi, un module 14 de réception et un module 16 d'initialisation. Le module 12 permet l'envoi d'une requête d'appel vers le second terminal 20. Le module 14 permet la réception d'un numéro d'appel vers un troisième terminal 30. Le module 16 permet l'initialisation d'un appel vers le troisième terminal 30 à partir du numéro d'appel reçu par le module 14 de réception. Le premier terminal 10 peut, en outre, comprendre un module d'interruption, non représenté, d'une communication, par exemple avec le second terminal 20, à l'expiration d'un délai déterminé.

Le serveur 40, illustré par la figure 3, comprend un module 42 de réception, un module 44 de sélection, un module 46 d'activation et un module 48 d'envoi. Le module 42 permet la réception d'une requête d'appel vers le second terminal 20 envoyée par le premier terminal 10. Le module 44 permet la sélection d'un numéro d'appel vers un troisième terminal 30. Le module 46 permet l'activation d'un renvoi d'appel du troisième terminal 30 vers le second terminal 20. Le module 48 permet l'envoi, au premier terminal 10, du numéro d'appel sélectionné, vers le troisième terminal 30.

Dans une forme de réalisation du système selon l'invention, le premier serveur 40 et le second serveur 50 sont distincts et agencés pour établir des communications et communiquer entre eux. Dans ce cas, le second serveur 50 comprend un module de gestion, non représenté, de renvoi d'appel permettant de gérer les renvois d'appel dans le réseau 5 de télécommunications. Le module 46 d'activation du premier serveur 40 est alors agencé pour activer le renvoi au niveau du second serveur 50, c'est-à-dire pour envoyer, au second serveur 50, une commande permettant la gestion, par le second serveur 50, d'un renvoi d'appel du troisième terminal 30 vers le second terminal 20. Par le terme « gestion », on entend la fourniture de l'information de renvoi d'appel du troisième terminal 30 vers le second terminal 20 pour qu'un lien de communication soit ensuite établi entre le premier terminal 10 et le second terminal 20 dans le réseau 5 de télécommunications. Le second serveur 50 peut être dans le même réseau 5 de télécommunications que le premier serveur 40 ou bien dans un second réseau de télécommunications, non représenté, par exemple géré par un second opérateur, les deux réseaux étant alors interconnectés.

Dans une forme de réalisation alternative du système selon l'invention, le premier serveur 40 et le second serveur 50 sont confondus en un même serveur unique. En d'autres termes, toutes les fonctions remplies par le premier serveur 40 et le second serveur 50 sont regroupées sur le premier serveur 40. Dans ce cas, le module d'activation 46 permet non seulement d'activer le renvoi d'appel mais aussi de le gérer.

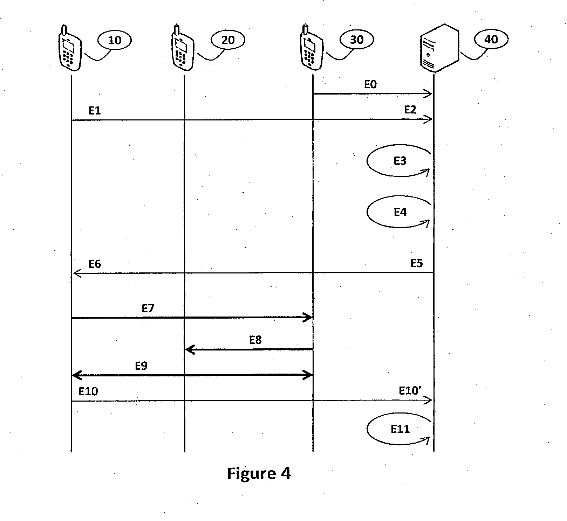

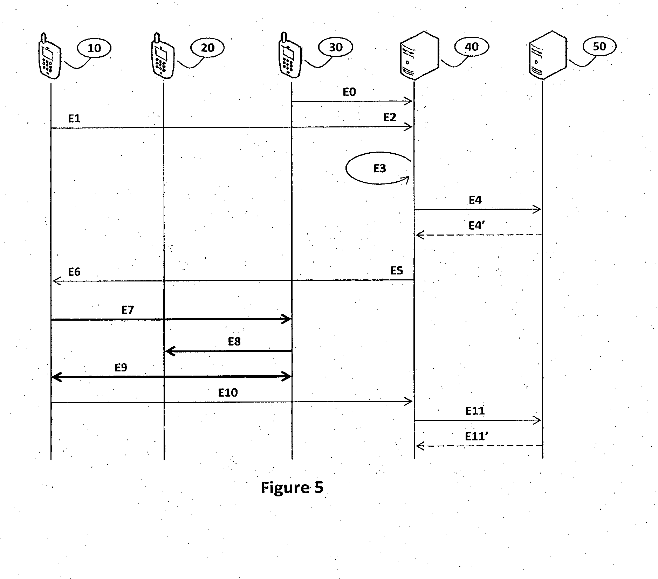

Les figures 4 et 5 illustrent le procédé de communication pour l'appel, depuis le premier terminal 10, vers le second terminal 20, dans le système de télécommunications selon l'invention. Dans un premier mode de réalisation illustré par la figure 4, le premier serveur 40 et le second serveur 50 sont confondus en un même serveur unique, illustré ici sous la forme du seul serveur 40. Dans un second mode de réalisation illustré par la figure 5, le premier serveur 40 et le second serveur 50 sont distincts.

Dans une étape préliminaire E0, le serveur 40 reçoit, du troisième terminal 30, un numéro d'appel vers le troisième terminal 30 et, éventuellement, au moins une information parmi : le code de renvoi d'appel du troisième terminal 30, si celui-ci est nécessaire pour activer un renvoi d'appel, le réseau de télécommunications ou l'opérateur du réseau de télécommunications auquel le troisième terminal 30 a souscrit, les types d'abonnements dont il dispose auprès de l'opérateur auprès duquel il a souscrit, les dates ou horaires auxquelles son ou ses abonnements peuvent être utilisés, une durée d'appel qu'il souhaite céder ou partager, éventuellement vers une destination donnée (par exemple, vers un pays donné), etc. L'étape E0 peut être optionnelle dans le cas où le serveur 40 a directement accès à ces informations, par exemple, si celles-ci sont stockées dans une base de données, non représentée, couplée au serveur 40.

Dans une étape E1, le premier terminal 10 envoie au serveur 40 une requête d'appel du premier terminal 10 vers le second terminal 20. Une telle requête permet au premier terminal 10 d'indiquer au serveur 40 qu'il souhaite initialiser un appel vers le second terminal 20. La requête d'appel comprend le numéro d'appel vers le second terminal 20. La requête d'appel pour communiquer, au serveur 40, le numéro d'appel vers le second terminal 20, peut prendre la forme, par exemple, d'un message du type service de message court ou Short Message Service (SMS), d'un email, d'une communication vocale, par exemple avec un serveur vocal, etc.

Dans une étape E2, le serveur 40 reçoit la requête d'appel vers le second terminal 20, envoyée par le premier terminal 10, puis sélectionne, dans une étape E3, un numéro d'appel vers un troisième terminal 30. Une telle sélection peut être réalisée entre une pluralité de numéros d'appel liés à différents troisièmes terminaux 30, en se basant, par exemple, sur le type d'abonnement associé au numéro d'appel, sur la date à laquelle la requête d'appel est reçue, l'heure à laquelle la requête d'appel est reçue, de sorte à fournir au premier terminal 10 un numéro d'appel correspondant à un abonnement, associé à un troisième terminal 30, utilisable au moment de la requête d'appel pour appeler le second terminal 20. Par le terme « utilisable », on entend le fait qu'un abonnement dispose d'une durée d'appel à consommer au moment de la requête d'appel, par exemple, à la date et à l'heure auxquelles la requête d'appel est effectuée.

Une fois le numéro d'appel, vers un troisième terminal 30, sélectionné, le serveur 40 active, dans une étape E4, un renvoi d'appel du troisième terminal 30 vers le second terminal 20.

Dans le mode de réalisation du procédé selon l'invention illustré par la figure 4, lorsque le serveur 40 et le serveur 50 sont confondus en un même serveur unique, le serveur 40 gère les renvois d'appel, c'est à dire qu'il gère lui-même le renvoi d'appel du troisième terminal 30 vers le second terminal 20. En d'autres termes, toute communication vers le troisième terminal 30 sera transférée vers le second terminal 20 par le serveur 40.

Dans le mode de réalisation du procédé selon l'invention illustré par la figure 5, lorsque le serveur 40 et le serveur 50 sont différents, le serveur 50 gère les renvois d'appel, c'est à dire qu'il gère lui-même le renvoi d'appel du troisième terminal 30 vers le second terminal 20. En d'autres termes, toute communication vers le troisième terminal 30 sera transférée vers le second terminal 20 par le serveur 50. Pour réaliser le renvoi d'appel, le premier serveur 40 envoie alors, dans l'étape E4, au second serveur 50, une commande de mise en place d'un renvoi d'appel du troisième terminal 30 vers le second terminal 20. Le second serveur 50 met alors en place le renvoi d'appel et peut alors envoyer en retour, au premier serveur 40, un message de réponse, dans une étape E4', pour confirmer l'activation du renvoi. Le second serveur 50 peut être, dans ce cas, un serveur de renvoi d'appel géré par un opérateur d'un autre réseau de télécommunications.

Une fois le renvoi d'appel activé, le serveur 40 envoie au premier terminal, dans une étape E5, le numéro d'appel sélectionné à l'étape E3 qui est reçu par le premier terminal dans une étape E6.

Dans une étape E7, le premier terminal initialise une communication, sur un lien de communication 8 du réseau 5, vers le troisième terminal 30 à partir du numéro d'appel reçu à l'étape E6. Une telle initialisation est réalisée par un échange standard de messages de signalisation, non représentés ici, dans le réseau 5 de télécommunications.

Ainsi, lorsque le troisième terminal 30 reçoit un message de signalisation pour l'établissement d'une communication venant du premier terminal 1, le renvoi d'appel du troisième terminal 30 vers le second terminal 20, activé à l'étape E4, permet l'initialisation, dans une étape E8, à travers d'autres échanges de messages de signalisation, d'une communication entre le premier terminal 10 et le second terminal 20. Le renvoi d'appel est effectué, par l'échange de messages de signalisation, sans qu'une communication vocale ne soit établie entre le premier terminal 10 et le troisième terminal 30, seule une communication vocale entre le premier terminal 10 et le second terminal 20 est réalisée, dans le cas, bien évidemment, où le second terminal 20 répond à la demande d'initialisation de communication vocale. Un tel renvoi d'appel, géré au coeur du réseau, est appelé Network Call Forward (NCF) ou, par exemple, Call Forward Unconditional dans la norme GSM. Ainsi, en appelant le numéro d'appel vers troisième terminal 30, reçu à l'étape E6, le premier terminal 10 sera redirigé, à l'étape E8, par le renvoi d'appel activé à l'étape E4, vers le second terminal 20.

Ainsi, suite à l'initialisation de l'appel vers le troisième terminal 30 à partir du numéro d'appel reçu et si l'appel aboutit, c'est-à-dire que la communication entre le premier terminal 10 et le second terminal 20 est établie, le premier terminal 10 et le second terminal 20 peuvent communiquer, dans une étape E9.

Une telle communication peut être réalisée, par exemple, pendant une durée prédéterminée qui peut correspondre à une durée d'appel configurée sur le premier terminal 10, qui met fin à la communication lorsque cette durée est écoulée, ou bien qui peut correspondre à la durée d'appel maximale envoyée au serveur 40, par le premier terminal 10, dans la requête d'appel vers le second terminal 20.

Dans ce dernier cas, le serveur 40 peut, par exemple, envoyer un message de signalisation, dans le réseau 5 de télécommunications, pour mettre fin à la communication entre le premier terminal 10 et le second terminal 20 lorsque la durée d'appel maximale est écoulée.

Lorsque la communication entre le premier terminal 10 et le second terminal 20 prend fin, le premier terminal 10 envoie, dans une étape E10, un message de désactivation de renvoi d'appel au serveur 40 suite à la fin de la communication entre le premier terminal 10 et le second terminal 20.

Le serveur reçoit ce message, dans une étape E10', puis désactive, dans une étape E11, le renvoi d'appel vers le troisième terminal 30, activé à l'étape E4.

Dans une forme de réalisation du procédé selon l'invention, le premier terminal 10 interrompt la communication avec le second terminal 20 à l'expiration d'un délai déterminé, par exemple, une durée d'appel maximale.

Dans le mode de réalisation du procédé selon l'invention illustré par la figure 4, le serveur 40, qui gère les renvois d'appel, annule, dans une étape E11, le renvoi précédemment activé à l'étape E4.

Dans le mode de réalisation du procédé selon l'invention illustré par la figure 5, pour désactiver le renvoi d'appel, le premier serveur 40 envoie, dans l'étape E11, au second serveur 50, une commande d'annulation du renvoi d'appel du troisième terminal 30 vers le second terminal 20. Le second serveur 50 annule alors le renvoi d'appel et peut, par la suite, envoyer en retour, au premier serveur 40, un message de réponse, dans une étape E4', pour confirmer l'annulation du renvoi.

Dans un mode de réalisation alternatif du procédé selon l'invention, non illustré, le premier terminal 10 envoie le message de désactivation de renvoi d'appel au serveur 40 suite à l'établissement de la communication entre le premier terminal 10 et le second terminal 20 de sorte que le serveur 40 puisse désactiver le renvoi d'appel vers le troisième terminal 30. En d'autres termes, dans ce mode de réalisation alternatif, les étapes E10, E10' et E11 sont réalisées pendant l'étape E9, postérieurement à l'établissement de la communication entre le premier terminal 10 et le second terminal 20.

Dans un mode de réalisation du procédé selon l'invention, une application, par exemple, du type softphone, installée sur le premier terminal, peut être configurée pour exécuter les étapes du procédé, mis en oeuvre par le premier terminal, sans l'intervention manuelle de l'utilisateur du terminal. En d'autres termes, l'utilisateur du premier terminal saisit le numéro d'appel vers le second terminal, par exemple, dans une interface utilisateur de l'application, puis l'application exécute les étapes du procédé mis en oeuvre par le premier terminal. Dans ce cas, le numéro d'appel vers le troisième terminal 30 peut être invisible pour l'utilisateur du premier terminal 10.

## Revendications

1. Procédé de communication pour l'appel, depuis un premier terminal (10), vers un second terminal (20), **caractérisé en ce qu'il** comprend, pour un serveur (40), les étapes de :
- réception (E2) d'une requête d'appel vers le second terminal (20), envoyée par le premier terminal (10),
- sélection (E3) d'un numéro d'appel vers un troisième terminal (30),
- activation (E4) d'un renvoi d'appel du troisième terminal (30) vers le second terminal (20), et,
- envoi (E5), au premier terminal (10), du numéro d'appel sélectionné.

2. Procédé selon la revendication 1, ledit procédé comprenant en outre une étape préliminaire (E0) de réception du numéro d'appel d'un troisième terminal (30).

3. Procédé selon la revendication 2, comprenant en outre la réception d'au moins une information parmi : le code de renvoi d'appel du troisième terminal, un identifiant d'un réseau de télécommunications ou d'un opérateur d'un réseau de télécommunications du troisième terminal, les dates ou les horaires auxquels un abonnement peut être utilisé, une durée d'appel, une destination d'appel donnée, le numéro d'appel et ces informations étant envoyés par le troisième terminal (30) ou un second serveur.

4. Procédé selon l'une des revendications 1 et 3, ledit procédé comprenant en outre une étape (E10') de réception d'un message de désactivation de renvoi d'appel.

5. Procédé de communication selon la revendication 1, **caractérisé en ce qu'**il comprend, pour le premier terminal (10), les étapes de :
- envoi (E1) d'une requête d'appel vers le second terminal (20),
- réception (E6) d'un numéro d'appel vers un troisième terminal (30), et,
- initialisation (E7) d'un appel vers le troisième terminal (30) à partir du numéro d'appel reçu.

6. Procédé selon la revendication 5, dans lequel l'initialisation d'un appel vers le troisième terminal (30) à partir du numéro d'appel reçu est réalisée automatiquement.

7. Serveur (40), **caractérisé en ce qu'**il comprend :
- un module (42) de réception d'une requête d'appel vers un second terminal (20), envoyée par un premier terminal (10),
- un module (44) de sélection d'un numéro d'appel vers un troisième terminal (30),
- un module (46) d'activation d'un renvoi d'appel du troisième terminal (30) vers le second terminal (20), et,
- un module (48) d'envoi, au premier terminal (10), du numéro d'appel sélectionné.

8. Système de télécommunications (1) pour l'appel, d'un premier terminal (10) vers un second terminal (20), **caractérisé en ce qu'**il comprend :
- un premier terminal (10), un second terminal (20) et au moins un troisième terminal (30), le premier terminal (10) comprenant :
- un module (12) d'envoi d'une requête d'appel vers le second terminal (20),
- un module (14) de réception d'un numéro d'appel vers un troisième terminal (30),
- un module (16) d'initialisation d'un appel vers un troisième terminal (30) à partir d'un numéro d'appel reçu,
- un serveur (40) comprenant :
- un module (42) de réception d'une requête d'appel vers le second terminal (20), envoyée par le premier terminal (10),
- un module (44) de sélection d'un numéro d'appel vers un troisième terminal (30),
- un module (46) d'activation d'un renvoi d'appel du troisième terminal (30) vers le second terminal (20), et,
- un module d'envoi (48), au premier terminal (10), d'un numéro d'appel sélectionné, et,
- un réseau de télécommunications (5) entre le premier terminal (10), le second terminal (20), le troisième terminal (30) et le serveur (40).

9. Système selon la revendication 8, ledit système comprenant en outre un second serveur (50) comprenant un module de gestion de renvoi d'appel agencé pour gérer les renvois d'appel dans le réseau de télécommunications (5), le module d'activation (46) du premier serveur étant alors agencé pour activer le renvoi au niveau du second serveur (50).

10. Programme d'ordinateur comportant des instructions pour la mise en oeuvre, par un serveur (40), du procédé, selon l'une des revendications 1 à 4, lorsque ce programme est exécuté par un processeur.

## Patentansprüche

1. Kommunikationsverfahren für den Anruf von einem ersten Endgerät (10) an ein zweites Endgerät (20), **dadurch gekennzeichnet, dass** es für einen Server (40) die folgenden Schritte enthält:
- Empfang (E2) einer Anruf-Anforderung an das zweite Endgerät (20), gesendet vom ersten Endgerät (10),
- Auswahl (E3) einer Rufnummer an ein drittes Endgerät (30),
- Aktivierung (E4) einer Anrufweiterleitung vom dritten Endgerät (30) an das zweite Endgerät (20), und
- Senden (E5) der ausgewählten Rufnummer an das erste Endgerät (10).

2. Verfahren nach Anspruch 1, wobei das Verfahren außerdem einen vorhergehenden Schritt (E0) des Empfangs der Rufnummer eines dritten Endgeräts (30) enthält.

3. Verfahren nach Anspruch 2, das außerdem den Empfang mindestens einer Information unter den Folgenden enthält: der Anrufweiterleitungscode des dritten Endgeräts, eine Kennung eines Telekommunikationsnetzes oder eines Betreibers eines Telekommunikationsnetzes des dritten Endgeräts, die Daten oder die Zeiten, zu denen ein Abonnement genutzt werden kann, eine Rufdauer, ein gegebenes Anrufziel, wobei die Rufnummer und diese Informationen vom dritten Endgerät (30) oder einem zweiten Server gesendet werden.

4. Verfahren nach einem der Ansprüche 1 und 3, wobei das Verfahren außerdem einen Schritt (E10') des Empfangs einer Anrufweiterleitung-Deaktivierungsmitteilung enthält.

5. Kommunikationsverfahren nach Anspruch 1, **dadurch gekennzeichnet, dass** es für das erste Endgerät (10) die folgenden Schritte enthält:
- Senden (E1) einer Anruf-Anforderung an das zweite Endgerät (20),
- Empfang (E6) einer Rufnummer an ein drittes Endgerät (30), und
- Initialisierung (E7) eines Anrufs an das dritte Endgerät (30) ausgehend von der empfangenen Rufnummer.

6. Verfahren nach Anspruch 5, wobei die Initialisierung eines Anrufs an das dritte Endgerät (30) ausgehend von der empfangenen Rufnummer automatisch durchgeführt wird.

7. Server (40), **dadurch gekennzeichnet, dass** er enthält:
- ein Modul (42) zum Empfang einer Anruf-Anforderung an ein zweites Endgerät (20), gesendet von einem ersten Endgerät (10),
- ein Modul (44) zur Auswahl einer Rufnummer an ein drittes Endgerät (30),
- ein Modul (46) zur Aktivierung einer Anrufweiterleitung vom dritten Endgerät (30) an das zweite Endgerät (20), und
- ein Modul (48) zum Senden der ausgewählten Rufnummer an das erste Endgerät (10).

8. Telekommunikationssystem (1) für den Anruf von einem ersten Endgerät (10) an ein zweites Endgerät (20), **dadurch gekennzeichnet, dass** es enthält:
- ein erstes Endgerät (10), ein zweites Endgerät (20) und mindestens ein drittes Endgerät (30), wobei das erste Endgerät (10) enthält:
- ein Modul (12) zum Senden einer Anruf-Anforderung an das zweite Endgerät (20),
- ein Modul(14) zum Empfang einer Rufnummer an ein drittes Endgerät (30),
- ein Modul (16) zur Initialisierung eines Anrufs an ein drittes Endgerät (30) ausgehend von einer empfangenen Rufnummer,
- einen Server (40), der enthält:
- ein Modul (42) zum Empfang einer Anruf-Anforderung an das zweite Endgerät (20), gesendet vom ersten Endgerät (10),
- ein Modul (44) zur Auswahl einer Rufnummer an ein drittes Endgerät (30),
- ein Modul (46) zur Aktivierung einer Anrufweiterleitung vom dritten Endgerät (30) zum zweiten Endgerät (20), und
- ein Modul (48) zum Senden einer ausgewählten Rufnummer an das erste Endgerät (10), und
- ein Telekommunikationsnetz (5) zwischen dem ersten Endgerät (10), dem zweiten Endgerät (20), dem dritten Endgerät (30) und dem Server (40).

9. System nach Anspruch 8, wobei das System außerdem einen zweiten Server (50) enthält, der ein Anrufweiterleitung-Verwaltungsmodul enthält, das eingerichtet ist, um die Anrufweiterleitungen im Telekommunikationsnetz (5) zu verwalten, wobei das Aktivierungsmodul (46) des ersten Servers dann eingerichtet ist, um die Weiterleitung auf der Ebene des zweiten Servers (50) zu aktivieren.

10. Computerprogramm, das Anweisungen zur Durchführung des Verfahrens nach einem der Ansprüche 1 bis 4 durch einen Server (40) aufweist, wenn dieses Programm von einem Prozessor ausgeführt wird.

## Claims

1. Method of communication for calling, from a first terminal (10), to a second terminal (20), **characterized in that** it comprises, for a server (40), the steps of:
- reception (E2) of a call request bound for the second terminal (20), dispatched by the first terminal (10),
- selection (E3) of a call number bound for a third terminal (30),
- activation (E4) of a call forwarding from the third terminal (30) to the second terminal (20), and,
- dispatching (E5), to the first terminal (10), of the selected call number.

2. Method according to Claim 1, the said method furthermore comprising a preliminary step (E0) of receiving the call number of a third terminal (30).

3. Method according to Claim 2, furthermore comprising the reception of at least one item of information from among: the call forwarding code of the third terminal, an identifier of a telecommunications network or of an operator of a telecommunications network of the third terminal, the dates or the times at which a subscription can be used, a call duration, a given call destination, the call number and these items of information being dispatched by the third terminal (30) or a second server.

4. Method according to one of Claims 1 and 3, the said method furthermore comprising a step (E10') of receiving a call forwarding deactivation message.

5. Method of communication according to Claim 1, **characterized in that** it comprises, for the first terminal (10), the steps of:
- dispatching (E1) of a call request bound for the second terminal (20),
- reception (E6) of a call number bound for a third terminal (30), and,
- initialization (E7) of a call bound for the third terminal (30) on the basis of the call number received.

6. Method according to Claim 5, in which the initialization of a call bound for the third terminal (30) on the basis of the call number received is carried out automatically.

7. Server (40), **characterized in that** it comprises:
- a module (42) for receiving a call request bound for a second terminal (20), dispatched by a first terminal (10),
- a module (44) for selecting a call number bound for a third terminal (30),
- a module (46) for activating a call forwarding from the third terminal (30) to the second terminal (20), and,
- a module (48) for dispatching, to the first terminal (10), the selected call number.

8. Telecommunications system (1) for calling, from a first terminal (10) to a second terminal (20), **characterized in that** it comprises:
- a first terminal (10), a second terminal (20) and at least one third terminal (30), the first terminal (10) comprising:
- a module (12) for dispatching a call request bound for the second terminal (20),
- a module (14) for receiving a call number bound for a third terminal (30),
- a module (16) for initializing a call bound for a third terminal (30) on the basis of a call number received,
- a server (40) comprising:
- a module (42) for receiving a call request bound for the second terminal (20), dispatched by the first terminal (10),
- a module (44) for selecting a call number bound for a third terminal (30),
- a module (46) for activating a call forwarding from the third terminal (30) to the second terminal (20), and,
- a module (48) for dispatching, to the first terminal (10), a selected call number, and,
- a telecommunications network (5) between the first terminal (10), the second terminal (20), the third terminal (30) and the server (40).

9. System according to Claim 8, the said system furthermore comprising a second server (50) comprising a call forwarding management module designed to manage the call forwarding in the telecommunications network (5), the activating module (46) of the first server then being designed to activate the forwarding at the level of the second server (50).

10. Computer program comprising instructions for the implementation, by a server (40), of the method, according to one of Claims 1 to 4, when this program is executed by a processor.
